# EUROPEAN PATENT SPECIFICATION

(11) **EP 2 967 766 B1**
(45) Date of publication and mention of the grant of the patent: **18.09.2019**
(21) Application number: 14776455.9
(22) Date of filing: 24.02.2014
(51) Int. Cl.: A61C 8/00

(54) **HEALING ABUTMENT KIT WITH COMBINATION OF SCANNING FEATURES**
HEILUNGSPFEILER-KIT MIT KOMBINATION VON SCAN-FUNKTIONEN
KIT DE PILIER DE CICATRISATION AVEC COMBINAISON DE CARACTÉRISTIQUES DE SCANNAGE

(30) Priority: 13.03.2013 US 201313798894
(43) Date of publication of application: 20.01.2016
(73) Proprietor: Biomet 3i, LLC, Palm Beach Gardens, FL 33410 (US)
(72) Inventor: HERRINGTON, Stephen, M., Naples, Florida 34110 (US); GOODMAN, Ralph, E., West Palm Beach, Florida 33415 (US); SUTTIN, Zachary, B., Jupiter, Florida 33458 (US)
(74) Representative: Mays, Julie
(86) International application number: PCT/US2014/017929
(87) International publication number: WO 2014/158534

(56) References cited:
- WO-A1-2012/126475
- KR-B1- 101 108 280
- US-A- 6 129 548
- US-A1- 2008 233 537
- US-A1- 2008 261 176
- US-A1- 2008 261 176
- US-A1- 2012 295 226
- US-A1- 2012 295 226
- US-A1- 2013 196 290

## Description

### FIELD OF THE INVENTION

The present invention relates generally to an abutment kit for a dental implant system. More particularly, the present invention relates to a gingival healing abutment kit having scanning features and provisionalization features.

### BACKGROUND OF THE INVENTION

The dental restoration of a partially or wholly edentulous patient with artificial dentition is typically done in two stages. In the first stage, an incision is made through the gingiva to expose the underlying bone. An artificial tooth root, in the form of a dental implant, is placed in the jawbone for osseointegration. The dental implant generally includes a threaded bore to receive a retaining screw for holding mating components thereon. During the first stage, the gum tissue overlying the implant is sutured and heals as the osseointegration process continues.

Once the osseointegration process is complete, the second stage is initiated. Here, the gingival tissue is re-opened to expose an end of the dental implant. A healing component or healing abutment is fastened to the exposed end of the dental implant to allow the gingival tissue to heal therearound. It should be noted that the healing abutment can be placed on the dental implant immediately after the implant has been installed and before osseointegration. In recent years, for some situations, the osseointegration step and gingival healing steps have been combined into a one-step process. Alternatively, instead of a healing abutment, a temporary abutment may be used to support a temporary prosthesis and also serves the purpose of shaping the gingiva above the dental implant, just like a healing abutment.

In more recent years, scanning technologies have been used to aid in the development of permanent prostheses. The scanning technologies are used to locate the underlying dental implant to which the final prosthesis is supported, as well as the adjacent soft tissue, the adjacent dentition, and the opposing dentition. The present disclosure is directed at gingival healing abutment systems (including temporary abutment systems), components, and methods that can be used in conjunction with scanning technologies.

US 2012/295226 A1 describes a healing abutment kit comprising an abutment, a screw, a dental implant and a plurality of healing abutment caps, wherein the base includes markers indicating information concerning the abutment itself and the underlying dental implant, and wherein the plurality of healing abutment caps include an outer surface with an anatomically shaped tooth.

### SUMMARY OF THE INVENTION

In one examplary enbodiment, which does not form part of the present invention, a healing abutment assembly for attachment to a dental implant having a threaded bore is described. The healing abutment assembly includes a base, a polymeric abutment cap, and a screw. The base has a lower region and an upper region. The lower region includes an anti-rotational feature for non-rotationally mating with the dental implant. The upper region includes a first anti-rotational structure and at least one retention groove. The base has a though-bore extending through the lower and upper regions. The polymeric abutment cap is coupled to the upper region of the base. The polymeric abutment cap has at least one projection configured to mate with the at least one retention groove of the base. The polymeric abutment cap has a second anti-rotational structure to mate with the first anti-rotational structure of the base. A top surface of the polymeric abutment cap includes one or more information markers providing information concerning the polymeric abutment cap and the underlying dental implant. The screw extends through the through-bore of the base and engages the threaded bore of the dental implant. The screw holds the base on the dental implant.

The present invention is a healing abutment kit for use with a dental implant having a threaded bore is according to claim 1.

In yet another exemplary embodiment, which does not form part of the present invention, an abutment system for attachment to a dental implant having a threaded bore and for engaging and/or shaping the surrounding gingival tissue is described. The abutment system includes a base and a polymeric abutment cap. The base includes a lower region and an upper region. The lower region includes an anti-rotational feature for non-rotationally mating with one of the dental implants. The upper region includes a first anti-rotational structure and a first axial retention structure. The polymeric abutment cap has a second anti-rotational structure for mating with the first anti-rotational structure and a second axial retention structure for mating with the first axial retention structure. The abutment cap has an upper surface that includes information markers. The information markers provide information concerning the abutment cap and the underlying dental implant.

A method of using a healing abutment kit with a dental implant having a threaded bore is described but does not form part of the present invention. The kit including a base and a plurality of polymeric abutment caps. Each of the polymeric abutment caps has different geometric dimensions. The method includes mating the base onto the dental implant, and selecting one of the plurality of polymeric abutment caps for mating with the base. The method further includes attaching the selected polymeric abutment cap with the base, and permitting gingival tissue to heal around the combination of the base and the selected polymeric cap. The method also includes scanning the upper surface polymeric abutment cap to identify a unique code that indicates the geometric dimensions of the polymeric abutment cap and information concerning the underlying dental implant.

The above summary is not intended to represent each embodiment or every aspect of the present disclosure. Rather, the summary merely provides an exemplification of some of the novel features presented herein. The above features and advantages, and other features and advantages of the present disclosure, will be readily apparent from the following detailed description of exemplary embodiments and best modes for carrying out the present invention when taken in connection with the accompanying drawings and the appended claims.

### BRIEF DESCRIPTION OF THE DRAWINGS

The foregoing and other advantages of the invention will become apparent upon reading the following detailed description and upon reference to the drawings.
FIG. 1 is a side view of a healing abutment assembly to be attached to a dental implant;
FIG. 2A is a cut-away, perspective view of the healing abutment assembly of FIG. 1;
FIG. 2B is an exploded perspective view of the healing abutment assembly of FIG. 1;
FIG. 3 is a view of the upper surface of one of the healing abutment assemblies that includes the information markers;
FIG. 4 is a side view and a top view of four different healing abutment assemblies;
FIG. 5 is a view of a kit that can be used to assemble four different types of healing abutment assemblies, and an implant;
FIGS. 6A-6E are various views of another abutment assembly that engages the gingival tissue according to a further alternative embodiment of the invention; and
FIGS. 7A-7E are various views of yet another abutment assembly that engages the gingival tissue according to another alternative embodiment of the invention.

While the present disclosure is susceptible to various modifications and alternative forms, specific embodiments have been shown by way of example in the drawings and will be described in detail herein. It should be understood, however, that the present disclosure is not intended to be limited to the particular forms disclosed. Rather, the present disclosure is to cover all modifications, equivalents, and alternatives falling within the scope of the present disclosure as defined by the appended claims.

### DESCRIPTION OF ILLUSTRATIVE EMBODIMENTS

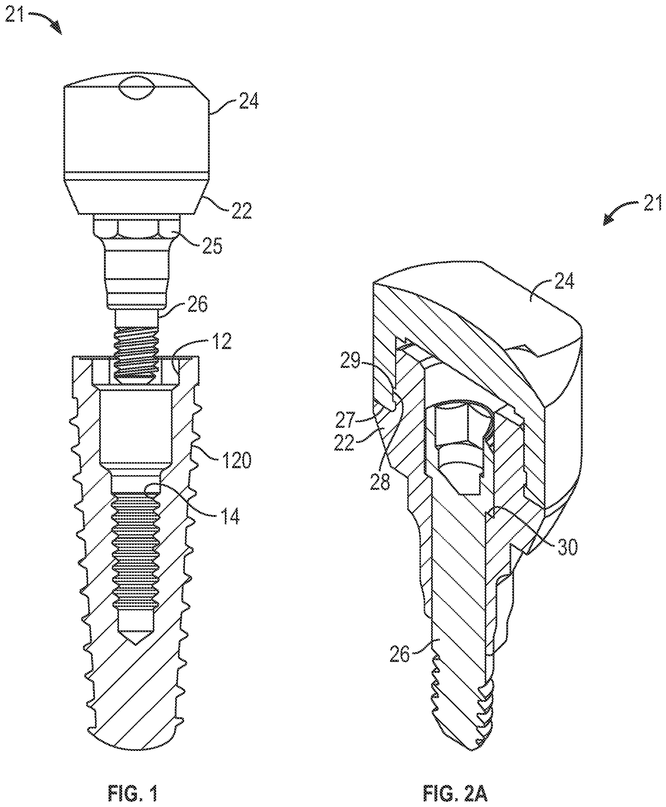

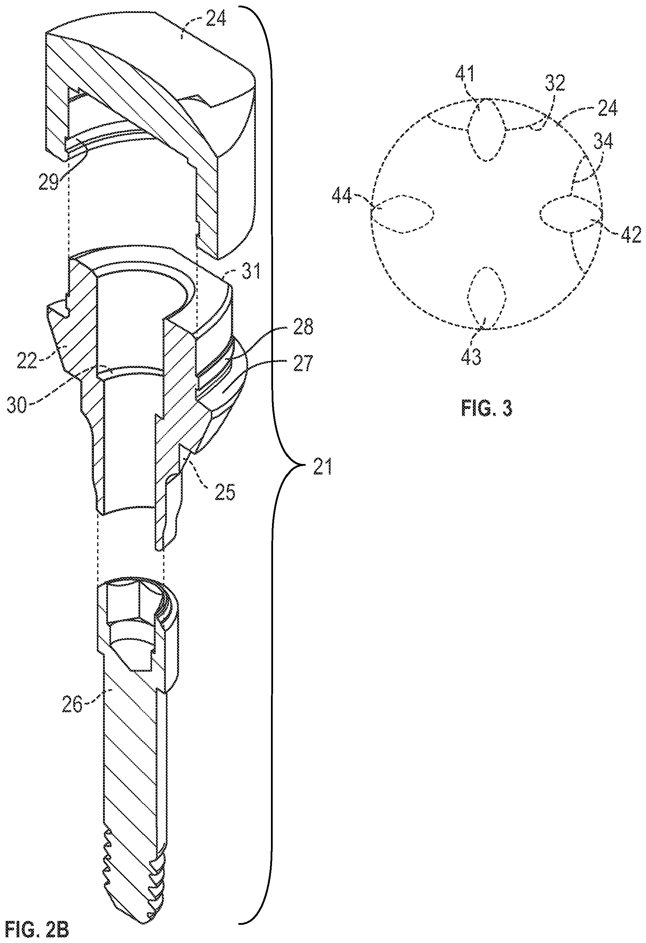

Referring to FIG. 1, a dental implant 120 includes a bore with an anti-rotational section 12 and a threaded section 14. The anti-rotational section 12 is shown as a hexagonal socket, although several other types of anti-rotational features (both internal and external) can be used on the dental implant 120. A healing abutment assembly 21 is to be mated with the dental implant 120. The healing abutment assembly 21 includes a base 22, an abutment cap 24, and a screw 26. The base 22 of the healing abutment assembly 21 includes a complementary anti-rotational feature 25 (here, a hexagonal section) that mates with the anti-rotational section 12 of the implant 120. The head of the screw 26 rests against a seating surface 30 (FIGS. 2A and 2B) within a through-bore of the base 22. The threads of the screw 26 engage the threaded section 14 of the dental implant 120 to hold the healing abutment assembly 21 on the dental implant 120.

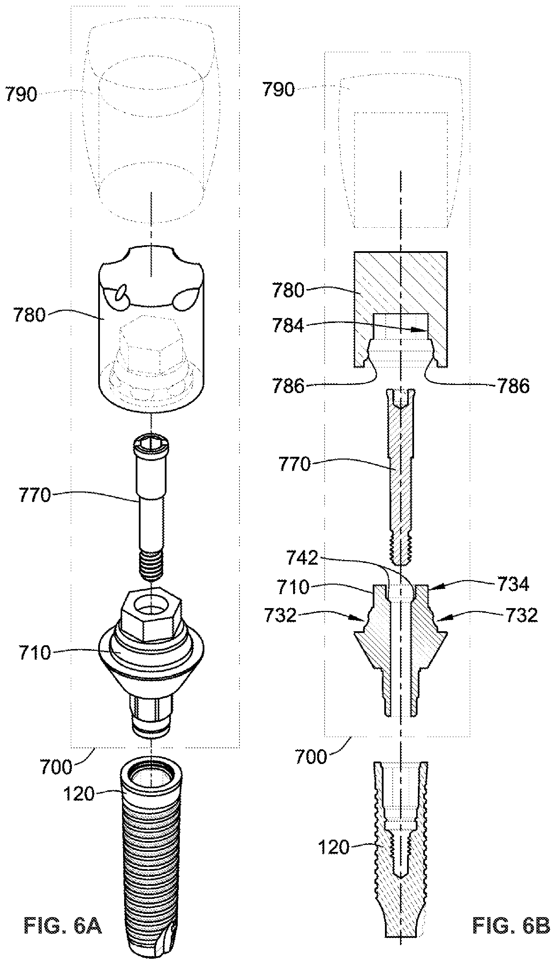

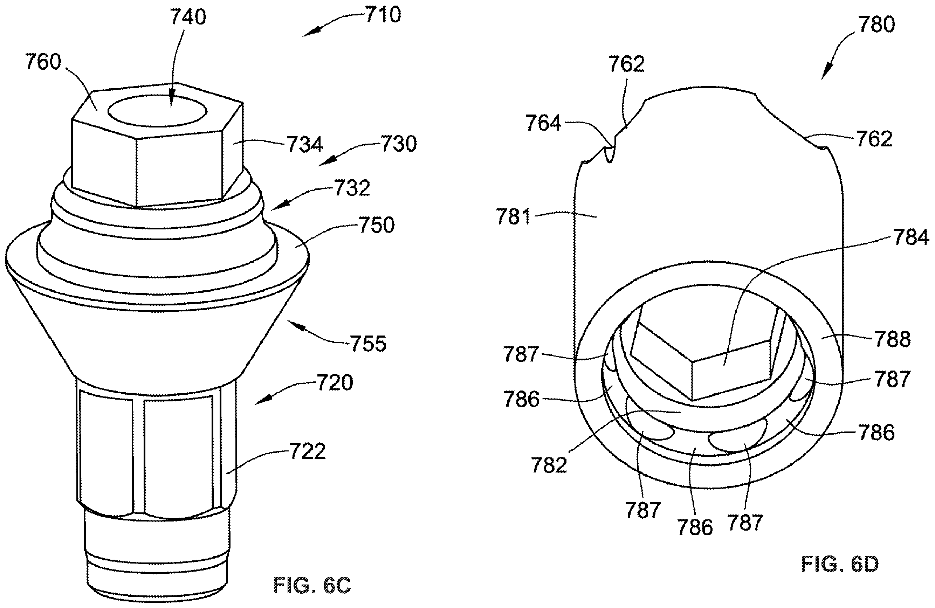

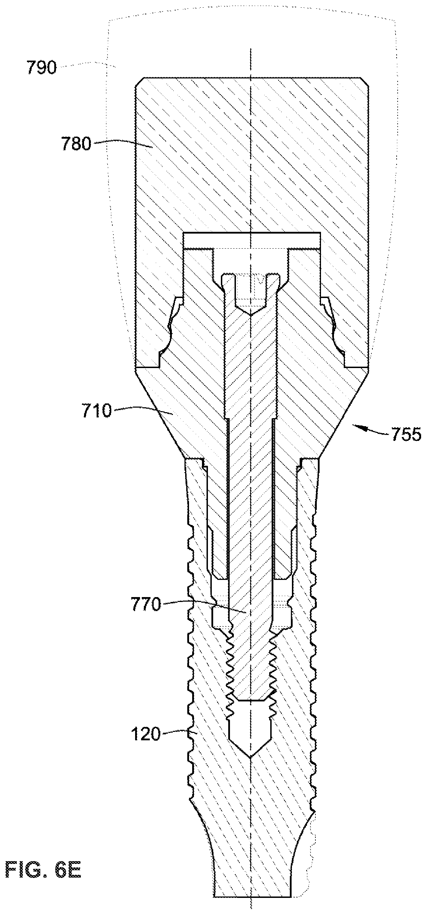

FIGS. 2A and 2B illustrate more of the details of the healing abutment assembly 21. The base 22 includes a flange 27 that separates a lower portion of the base 22 from an upper portion of the base 22. The lower portion includes the anti-rotational feature 25 that engages the corresponding feature 12 within the implant 120. The upper portion of the base 22 includes a projection 28 that serves as an axial retention feature for the abutment cap 24. The projection 28 mates with a corresponding groove 29 within the interior region of the abutment cap 24. Preferably, the abutment cap 24 mates with the base 22 in a snap fit arrangement. Other types of axial retention features (e.g., projections and recesses) that can axially hold the abutment cap 24 on top of the base 22 may be used as well, some of which are described below with respect to FIGS. 6-7. Additionally, the present invention contemplates the use of light-strength adhesives to seal the interface between the abutment cap 24 and the base 22 to inhibit the flow of fluids between the two structures and minimize the accumulation of bacteria.

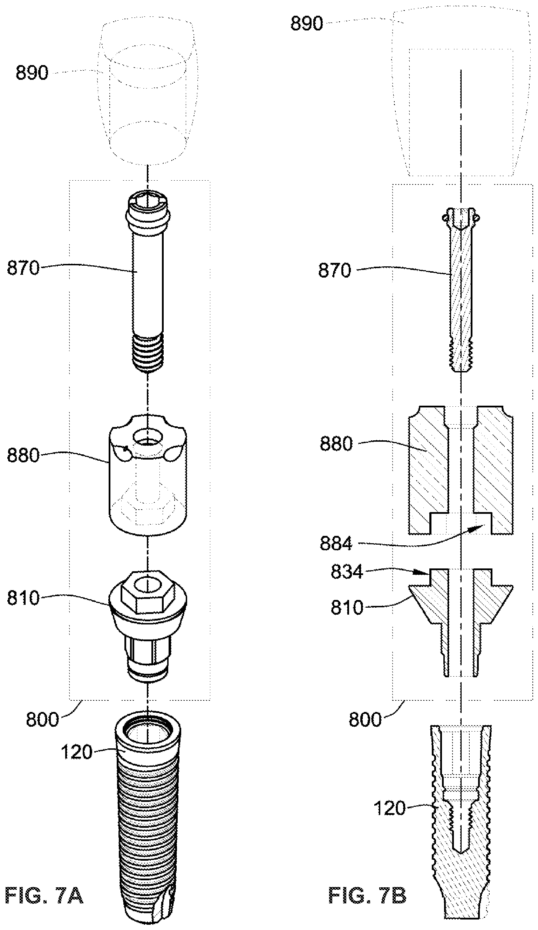

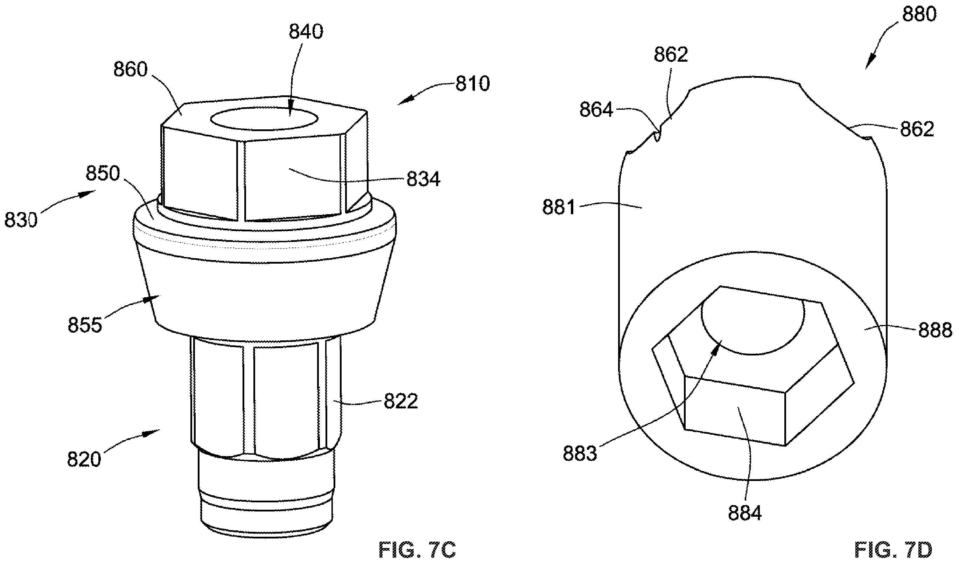

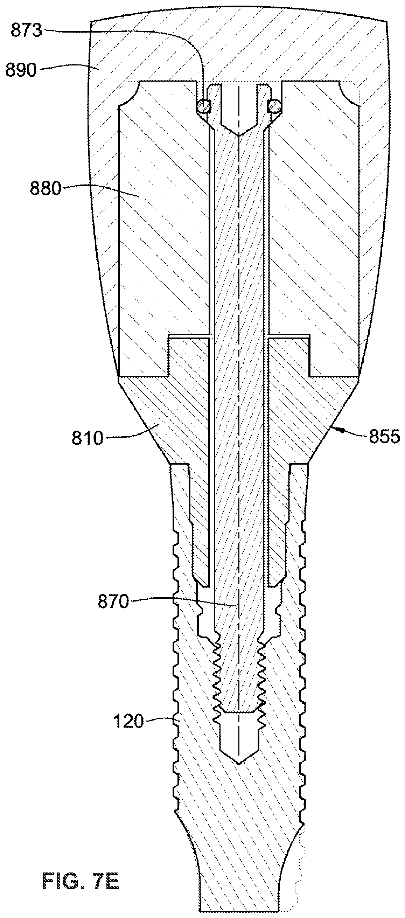

The base 22 also includes an anti-rotational feature 31 for non-rotationally holding the abutment cap 24 on the base 22. As shown, the anti-rotational feature 31 is a flat surface that mates of the corresponding flat surface (not shown) on the interior region of the abutment cap 24. One or more flat surfaces may be used for the anti-rotational feature 31 on the base 22 (e.g., the upper portion of the base 22 may include a polygonal shape, such as those shown in FIGS. 6-7). Other structural features having non-round shapes can be used for this purpose as well. It should be noted that the embodiment of FIGS. 1-2 contemplates an arrangement like FIG. 7 wherein the screw 26 is exposed at the upper surface of healing cap 24 and axially holds both the healing cap 24 and the base 22 on the dental implant 120. In this case, the upper surface of the healing cap 24 would require an opening for receiving the screw 26, and perhaps include an o-ring for sealing the gap between the opening and the head of the screw 26.

The base 22 is typically made of metal, although it could be made of a polymeric material. The abutment cap 24 is preferably made of a polymeric material, such as polyether ether ketone (PEEK). The screw 26 is also preferably made of a metal.

FIG. 3 illustrates the abutment cap 24, including one type of information marker system that presents a unique code for identifying the specific type of abutment cap 24 (and, hence, the specific type of healing abutment assembly 21). As described in more detail below, information markers 41-44 on the upper surface provide this unique code. In FIG. 3, the upper surface also includes orientation identifiers 32, 34 that serve the purpose for identifying the order in which the information markers 41-44 are read, as discussed below. While FIG. 3 describes the information markers 41-44 being present in a binary code, other types of code systems are possible as well for identifying each unique abutment cap 24. Also, other types of information markers that are different from those shown in FIG. 3 are discussed below with respect to FIGS. 6-7.

In FIG. 3, there are four possible locations for the information markers 41-44 at 12 o'clock, 3 o'clock, 6 o'clock, and 9 o'clock. Each of the four locations may or may not have the corresponding information market 41-44 present. Accordingly, when there are four possible information marker locations, there are sixteen possible combinations, yielding sixteen unique identification codes that are dictated by the information markers 41-44. The orientation identifiers 32, 34 determine the order for reading the information markers 41-44. Because the orientation markers 32 and 34 are in an asymmetric arrangement, one of the orientation markers (here orientation marker 32) is used as the starting point to indicate the first information marker location (at 12 o'clock), which has information marker 41 present. Thus, the orientation identifiers 32, 34 are present on each of the healing abutment caps 24, but each of the information markers 41-44 may or may not be present. For the healing abutment cap 24 in FIG. 3, there are only two information markers 41, 42 present, while information markers 43, 44 are absent (*i.e.,* shown in dashed lines to illustrate where they would have been on the upper surface had they been included). The presence of the two information markers 41, 42, and the absence of the other two information markers 43, 44 provide a code that is akin to a binary code in that the presence or absence of each marker can be thought of as "1" or a "0." In that case, the healing abutment cap 24 in FIG. 3 would have a code of 1-1-0-0.

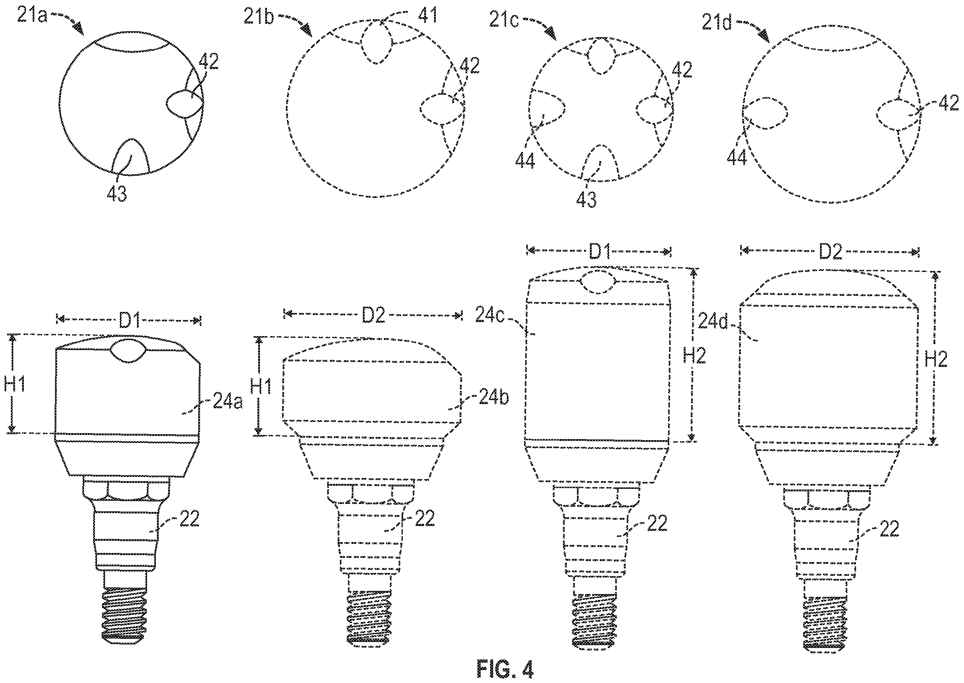

FIG. 4 includes four different healing abutment caps 24a, 24b, 24c, and 24d that can be attached to the same base 22 to form four different healing abutment assemblies 21a, 21b, 21c, and 21d. As shown, healing abutment caps 24a, 24b, 24c, and 24d are different in that they have different diameters (D1 or D2) and heights (HI or H2). Other unique characteristics of the abutment caps 24 can also be identified by the codes formed by information markers, such as certain non-round shapes (e.g., oval) or certain types of tapering angles that lead away from the flange 27 of the base 22 towards the upper surface of the cap 24. Because of the unique code on the top of each of the abutment caps 24a, 24b, 24c, and 24d, each of the healing abutment assemblies 21a, 21b, 21c, and 21d can be readily identified by its top surface. Healing abutment cap 24a has a code of 0-1-1-0; healing abutment cap 24b has a code of 1-1-0-0; healing abutment cap 24c has a code of 1-1-1-1; and healing abutment cap 24d has a code of 0-1-0-1. Again, the orientation marker 32 dictates the first part of the code, and the remaining three parts to the code are read in a clockwise order. Of course, other types and shapes of information markers are possible, and the order of reading them can be dictated by other orientation guides. For example, the four information markers could be four discrete symbols, such as a "+" symbol, a "-" symbol, a "o" symbol, and a "Δ" symbol (etched or printed on the upper surface). The presence or absence of each discrete symbol can be thought of as "1" or a "0", such that the orientations markers for reading in a certain order are not needed.

In addition to providing information (e.g., dimensions, tapering angles, and shapes) about the healing abutment assemblies 21a, 21b, 21c, and 21d, the information markers 41-44 can also provide information regarding the underlying implant 120. For example, because the height dimension of the base 22 is known, and the height of the healing abutment cap 24 is known, the location of the table (the uppermost surface) of the implant 120 is also known in the z-direction (the direction of the central axis of the implant 120) and in the x-y direction. Additionally, the orientation of the anti-rotation feature 12 of the implant 120 can be aligned with one or more of the information markers 41, 42, 43, 44, or the orientation markers 32, 34. As an example, if the anti-rotation feature 12 is a hexagonal socket, the orientation marker 32 can be aligned with one of the six surfaces of the hexagonal socket. Or, an information marker location can be aligned with one of the six surfaces of the hexagonal socket. Alternatively, an arrow marker or diamond marker can be added to the upper surface to identify one of the flat surfaces of the anti-rotation feature 12. In summary, because the location of the anti-rotational feature 31 of the base 22 is at a known angular position relative to the anti-rotational feature 12 of the implant 120, a marker on the upper surface of the healing abutment cap 24 can also be used to locate one or more features of the implant 120. Additional information that can be identified by the information markers 41-44 is discussed below with respect to FIGS. 6-7.

Other types of coded systems could be used instead of the binary-coded type of system that is discussed with reference to FIGS. 3-4. For example, each type of different information marker (e.g., different symbols, such as "+" symbol, a "-" symbol, a "o" symbol, and a "Δ" symbol, etc.) could indicate a different healing abutment assembly 21. Or, the same symbol at different locations on the surface of the healing cap 24 could identify the unique healing cap 24 (and, hence, the abutment assembly 21) For example, the top surface of the abutment cap 24 can be segmented into twelve regions, wherein each 30° segment has a geometrical pie shape, like hour segments on a clock. A single orientation line is present at one angular location, *e.g.,* at 12 o'clock, and is used for locating the anti-rotational surface of the underlying implant 120 as well as setting the circumferential order of the twelve segments. A single type of information marker (*e.g.,* a "Δ" symbol) can be placed at one of the twelve segments on the top surface, with each of the twelve segments corresponding to one of twelve possible healing abutment caps 24. Of course, the discrete locations can be more or less than twelve, depending on the number that is needed. And, the discrete locations may include different radially spaced locations, and not just circumferentially spaced locations. Yet further, a combination of discrete locations and specific types of symbols can increase the potential number of options (*i.e.,* a "o" symbol at circumferential segment #1 of 12 is healing cap "A", but a "Δ" symbol at circumferential segment #1 of 12 is healing cap "B"). Accordingly, the location of a single type (or multiple types) of information marker within one of several distinct locations on the top surface provides a coded system to identify which healing abutment assembly 21 is being used, and the scanning process can easily identify the information marker and its location.

Alternatively, a first specified region on the healing cap 24 could include a code (*e.g.,* a size of certain symbol, or a number of certain symbols) for identifying the healing cap's height. A second specified region on the healing cap 24 could include a different code (e.g., a size of certain symbol, or a number of certain second symbols) for identifying the healing cap's diameter. A third specified region on the healing cap 24 could include another code (e.g., a size of certain symbol, or a number of certain third symbols) for identifying the healing cap's taper. In addition to the unique codes being defined by symbols, the codes for defining the dimensions of the healing cap 24 can be presented in the form of alpha-numeric characters or different colors (or combinations thereof) that define one or more dimensions of the healing cap. Because the resolution and the photo-realistic data capture of the current intra-oral scanning systems and method has improved, these colors and alpha-numeric characters can be readily identified, such that the identification of healing cap 24 can be achieved. Accordingly, intra-oral scanning of the healing cap 24 may capture scan data corresponding to a unique combination of alpha-numeric character(s) and color(s) from the healing cap that serves as a code (or part of a code) for identifying the particular healing cap 24.

Further, because the data acquisition capabilities of current intra-oral scanning systems and methods has improved, the upper surface of the healing cap 24 can be scanned and shape-matched to help identify the healing cap due to its diametric dimension. In other words, the actual diametric size of the healing cap 24 serves as part of the information that is used to identify the healing cap 24. The location of any information marker on the upper surface relative to the scanned circumference of the upper surface provides an informational combination that can be matched against library of healing caps to identify the specific healing cap 24 that has been scanned. In that situation, the circumference of the healing cap 24 can be thought of as providing a diameter, whereas the marker(s) may provide the information for the height of the healing cap 24 and the location of the underlying implant's anti-rotation feature. The markers (e.g., a "Δ" symbol or a "o" symbol) can have the same size on all diametric sizes of the healing caps 24, such that the relative dimensions of the information marker to each healing cap's diameter is different, which assists with the shape-matching algorithm. Alternatively, the shape matching can rely on less than the entire upper surface, such as when the gingiva begins to grow slightly over the healing cap 24. The shape-matching algorithm may rely on a partial geometric match of the upper surface captured by the scan, wherein the partial geometry includes one or more markers and symbols on the upper surface, part of the upper surface itself, and perhaps other features, such as an exposed screw head (See FIG. 7). In short, shape-matching may automatically identify a healing cap 24 by comparing its geometric features captured from an intraoral scan to a library of healing caps having unique geometric features on their upper surfaces.

Because the gingival tissue will contact and surround the healing abutment assemblies 21a, 21b, 21c, and 21d, identifying which type of healing abutment cap 24 (and, thus, the healing abutment assembly 21) is mated to the implant 120 by inspection of the upper surface is important, especially when intraoral scanning is used. In this methodology, after the dental implant 120 has been installed, a clinician may select a healing abutment cap 24 that is best suited for the conditions in the patient's mouth. The base 22 can be attached to the implant 120 through the use of the screw 26. The selected healing abutment cap 24 can then be snapped onto the base 22 by the retaining action of the projection 28 on the base 22 and the groove 29 on the healing abutment cap 24. The clinician will likely choose the selected healing abutment cap 24 from a variety of possible healing abutment caps 24 that could have been placed on the base 22. But, the identification of the selected healing abutment cap 24 is readily known by simply reviewing the code defined by the information markers 41, 42, 43, 44 on the upper surface of the selected healing abutment cap 24. Using an intraoral scanner to identify the conditions in the patient's mouth after the gingival tissue has healed becomes very easy by use of the information markers 41, 42, 43, 44 and the orientation markers 32, 34 because the output of the intraoral scanner can be displayed on a common display used in conjunction with a computer terminal. Additionally, some of the vertical cylindrical surface of the healing abutment cap 24 below the upper surface can also be received as scan data to help locate the healing abutment assembly 21 and the underlying dental implant. Accordingly, a patient-specific custom abutment can be developed because geometric information regarding the healing abutment assembly 21 is known, as well as the location of the implant 120 and the angular orientation of the implant's anti-rotational feature 12. The scanning may take place before, during, or after the gingival-healing period.

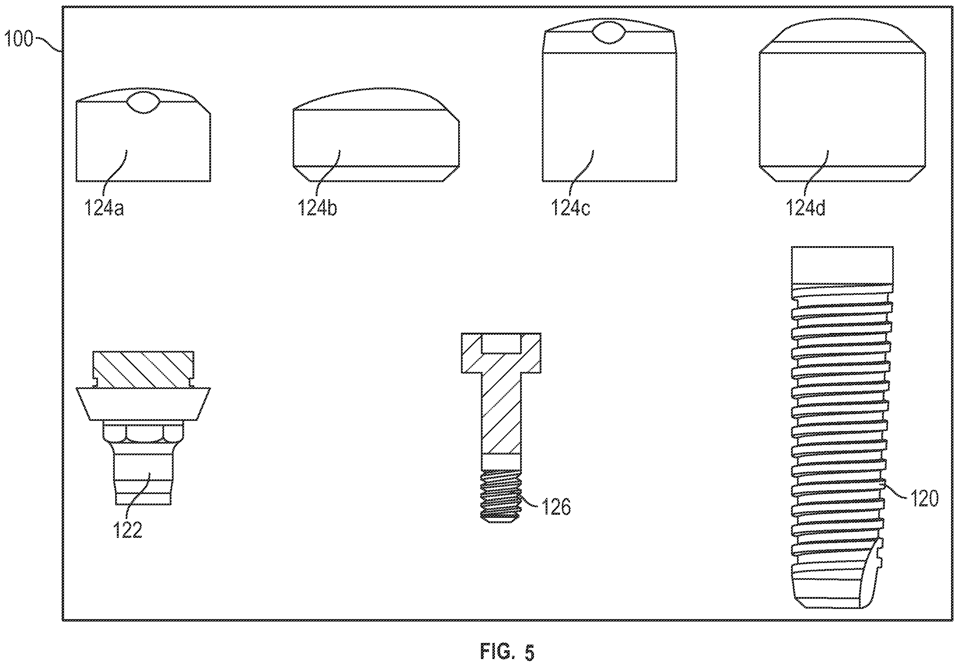

FIG. 5 illustrates a kit 100 that includes a dental implant 120, a base 122, four healing abutment caps 124a, 124b, 124c, 124d, and a screw 126. The kit 100 is preferably packaged and delivered together to the clinician, who installs the implant 120, attaches the base 122 to the implant 120 (via the screw 126), and then selects one of the healing abutment caps 124a, 124b, 124c, 124d that is best suited for the patient's conditions. Considering that the final location of the implant 120 in the patient's bone can be a variable, the differing heights of the healing abutment caps 124a, 124b, 124c, 124d are helpful to best fit the patient's conditions. Additionally, the emergence profile through the gingival tissue for the final prosthesis can be dictated by the diameter and tapering of the selected one of the healing abutment caps 124a, 124b, 124c, 124d.

It should be noted that the kit 100 may not include the dental implant 120, but would be used with a specific type of dental implant. For example, the kit 100 may include a base 122, four healing abutment caps 124a, 124b, 124c, 124d, and a screw 126 that is to be used on a Biomet 3i Certain® 5.0 mm implant system. And the codes provided by the information markers may indicate that the base 122 and the four healing abutment caps 124a, 124b, 124c, 124d are to be used with that specific Biomet 3i implant system. On the other hand, a different kit may include a differently designed base for mating with a different manufacturer's implant system, and the information markers are used to indicate that particular manufacturer's implant system. In other words, the present invention contemplates a plurality of different types of kits, and each type of kit is to be used on a specific type of implant system such that it includes a different base so as to mate with that specific implant. And, in addition to the codes being used to identify information concerning the healing abutment system and the underlying dental implant, the codes would also be used to identify the specific type of underlying implant that is being used. Hence, by scanning the upper surface of the healing cap, the information concerning (i) the healing abutment system, (ii) the location of the dental implant and its structural features, and (iii) the identity of the specific underlying implant (and its manufacturer) would be known.

In summary, the present invention contemplates a plurality of different kits in that different kits are used with different dental implant systems of a single manufacturer (e.g., different style of implant-abutment connection, different sizes of implant, etc.). And, the present invention contemplates a plurality of different kits in that the different kits are used for various dental implant systems from multiple manufacturers. In any event, the coding system on top of the healing abutment can be used to identify the specific type of underlying dental implant.

Thus far, the present invention has been described in terms of a healing abutment that includes the polymeric cap portion containing the information markers. FIGS. 6 and 7 describe another abutment system for engaging the gingival tissue that also includes a polymeric cap portion that contains information markers.

Referring now to FIGS. 6A-6E, a temporary abutment 710 of the present disclosure may be used for at least four purposes, which are explained in more detail below. First, the temporary abutment 710 may serve as a gingival healing abutment as its exterior surface is contoured to aid in the healing of a patient's gingival tissue. Second, the temporary abutment 710 may serve as a temporary prosthesis (i.e., it provides a convenient mount for removably attaching an acrylic portion having an anatomical tooth shape). Third, the temporary abutment 710 serves as a part of a scanning member (it holds the abutment cap 780) to permit a clinician to use one or more scanning techniques to obtain necessary information about the underlying implant's location and orientation for use in developing permanent prosthetic components. And fourth, the temporary abutment 710 may serve as a permanent abutment providing a convenient mount for a permanent prosthesis having an anatomical tooth shape.

The temporary abutment 710 has a subgingival region 720 and a supragingival region 730, which are separated by a flange 750. An outer surface 755 of the flange 750 is positioned to engage and aid in forming a patient's gingival tissue during the healing process. The subgingival region 720 includes an anti-rotational feature 722 (e.g., a hexagonal section) for mating with a corresponding anti-rotational feature of an implant (e.g., implant 120 in FIG. 6A). The anti-rotational feature 722 of the temporary abutment 710 can be any type of boss (e.g., polygonal boss, star boss, clover boss, etc.) or socket (e.g., polygonal socket, star socket, clover socket, etc.) such that it corresponds with an anti-rotational feature of the underlying implant to prevent relative rotation of the temporary abutment 710 with respect to the implant 120. It is contemplated that the temporary abutment 710 (and the other temporary abutments of the present disclosure) can be fashioned from gold, titanium, plastic, ceramic, or other similar metals or composites.

The supragingival region 730 includes one or more retention grooves or structures 732 and an anti-rotational structure 734 (e.g., a flat wall or surface). The retention grooves 732 are configured to mate in a snap-type axial holding engagement with corresponding male circumferential features or structures 786 of a temporary abutment cap 780. The one or more retention grooves 732 are configured to mate with the male circumferential features 786 with a retention force between about one and about ten pounds of force. That is, it takes between about one and about ten pounds of force to remove the temporary abutment cap 780 from its snap-fit type engagement with the temporary abutment 710. Alternatively, the supragingival region 730 of the temporary abutment 710 can include male circumferential features that are configured to mate in a snap-type axial holding engagement with corresponding retention grooves on an inside surface of the temporary abutment cap 780.

The anti-rotational structure 734 is configured to mate in a slidable engagement with a corresponding anti-rotational structure 784 to prevent relative rotation of the temporary abutment cap 780 and the temporary abutment 710. In the illustrated implementation, the anti-rotational structure 734 is shown as a polygonal structure that generally extends from a top surface 760 of the temporary abutment 710 toward the flange 750. The anti-rotational structure 734 can be one of a variety of known anti-rotational structures, such as, for example, one or more flat walls, grooves, slots, projections, or any combination thereof. Examples of anti-rotational structures for dental posts are shown in U.S. Patent Nos. 6,120,293, 6,159,010, and 8,002,547, each of which is commonly owned by the assignee of the present application. Regardless of the type of anti-rotational structure 734 chosen for the supragingival region 730 of the temporary abutment 710, the temporary abutment cap 780 has a correspondingly shaped structural surface (e.g., anti-rotational structure 784) for engaging the anti-rotational structure 734 so as to prevent relative rotation between the two components. The temporary abutment 710 is generally cylindrical in shape with an internal bore 740 for receiving a screw 770 to removably couple the temporary abutment 710 to the implant 120.

The top surface of the temporary abutment cap 780 includes four information marker locations 762. The information marker locations 762 are positioned circumferentially around the top surface of the temporary abutment cap 780 at 3 o'clock, 6 o'clock, 9 o'clock, 12 o'clock. Each of the information marker locations 762 is configured to include one or more information markers 764. The information marker 764 is shown as one notch. However, the present disclosure contemplates that the information markers 764 can be positive information markers, negative information markers, raised projections/pimples, recesses or dimples, notches, lines, etching, alphanumeric characters, etc. It is further contemplated that the cross-section of the information markers 764 can be rectangular, triangular, or various other shapes. Further, the information marker locations 762 themselves can act as information markers and provide and/or indicate information.

The information markers 764 are indicative of one or more characteristics of the temporary abutment 710, the temporary abutment cap 780, and/or of the underlying implant 120 to which the temporary abutment 710 and temporary cap 780 are attached. For example, one or more of the information markers 764 can be geometrically aligned with a flat of the non-rotational feature 722 of the temporary abutment 710 and/or a flat on the underlying implant to indicate the rotational orientation of the non-rotational features of the temporary abutment 710 and/or of the underlying implant. It is also contemplated that one or more of the information markers 764 may correspond to the height of the temporary abutment 10 and, hence, a height or vertical position (i.e., z-axis location) of a table or seating surface of the underlying implant. For another example, the information markers 764 can be indicative of the x-y location of the table or seating surface of the underlying implant. For another example, the information markers 764 can be indicative of the angle that the underlying implant rests with respect to vertical within the patient's jawbone (e.g., pitch and yaw). For another example, the information markers 764 can be indicative of the size and/or shape of the temporary abutment 710 and/or the underlying implant. For another example, the information markers 764 can be indicative of the manufacturer of the underlying implant.

The information markers 764 can be part of a binary marking system that identifies unique characteristics of the temporary abutment 710 and/or the underlying implant 120. As is well known, a binary-coded system exists as an array of digits, where the digits are either "1" or "0" that represent two states, respectively, ON and OFF. For each information marking location 762, the presence of an information marker 64 ("ON") is a 1 and the absence of an information marker 764 ("OFF") is a 0. By grouping sets of 1's and 0's together starting from a known starting location (e.g., 3 o'clock or the first location in the clockwise direction from the anti-rotational structure 34), information about each temporary abutment 710 is known. For the temporary abutment 710, the four information marker locations 762 can provide sixteen (16) different combinations. Additional details on information markers and the characteristics of the underlying implant and/or the abutment that are identified by the information markers (e.g., information markers 764) can be found in U.S. Patent 7,988,449.

The prosthesis assembly includes the temporary abutment 710 and the temporary abutment cap 780 coupled to a temporary prosthesis 790 (e.g., a temporary tooth). The implant 120 is installed in the jawbone (not shown) of a patient, and then the temporary abutment 710 is non-rotationally attached to the implant 120 via the non-rotational feature 722 and the screw 770. The temporary abutment 710 is attached to the implant 120 such that a bottom portion of the flange 750 of the temporary abutment 710 abuts and/or rests upon a table or seating surface of the dental implant 120. The temporary abutment cap 780 is snap-fitted onto the temporary abutment 710 and then the temporary prosthesis 790 is coupled to the temporary abutment cap 780.

The outer surface 781 of the temporary abutment cap 780 is configured to mate with and/or to be bonded with the temporary prosthesis 790. It is contemplated that the temporary prosthesis 790 is coupled to the temporary abutment cap 780 using cement (e.g., dental cement), glue, bonding agent, a press-fit engagement, a snap or click-type engagement, a screw or bolt, or a combination thereof. It is further contemplated that the temporary prosthesis 790 is removably or permanently coupled to the temporary abutment cap 780 such that the temporary prosthesis 790 and the temporary abutment cap 780 can be removed separately or in unison from the temporary abutment 710. Removal of the temporary prosthesis 790 from the temporary abutment cap 780 exposes the information markers 764, which can be scanned directly or indirectly (e.g., from an impression and/or stone/plaster model) to generate scan data that is at least used to determine the location and orientation of the implant 120, which, as explained herein, is used when developing a permanent patient-specific abutment and/or prosthesis.

The outer surface of the temporary prosthesis 790 and/or the outer surface 755 of the flange 750 are configured to be suitable for replicating the gingival emergence profile formed by a natural tooth (e.g., in a non-round shape). As such, after the temporary prosthesis 790 is installed, the patient's gingiva is permitted to heal around the temporary prosthesis 790 and/or the temporary abutment 710. Such a prosthesis assembly results in a gingival emergence profile approximating that of what would be around a natural tooth and/or that of what a clinician determined to be most appropriate for the given implant installation site (e.g., an ovular shape). In other words, the prosthesis assembly also acts as a gingival healing abutment. This is advantageous because, after the patient's mouth has an opportunity to heal and is ready to be processed (e.g., intra-oral direct scanning, impression scanning, or scanning of a model formed from the impression) for creating a permanent patient-specific abutment and prosthesis, the temporary prosthesis 790 and the temporary abutment cap 780 are removed to reveal the temporary abutment 710 and the resulting emergence profile of the adjacent gingiva. Because the resulting emergence profile approximates that of a natural tooth, the permanent patient-specific abutment and prosthesis can be accurately created from the scan data and/or from known data associated with the temporary abutment 10 (e.g., the known contours of the outer surface 55 of the flange 50 of the temporary abutment 10). For example, the permanent patient-specific abutment and prosthesis can be created and attached to the underlying implant 120 such that the permanent patient-specific abutment and prosthesis (not shown) are highly aesthetic and fit closely within the gingiva emergence profile adjacent to the implant 120 that was formed by the prosthesis assembly 100.

It is further contemplated that a kit or package of temporary abutment caps 780, where each temporary abutment cap 780 includes an outer surface with an anatomically shaped tooth (not shown), can be supplied and/or packaged together for use by, for example, clinicians. In such alternatives, the clinician is supplied with a variety of temporary abutment caps including different anatomically shaped teeth that can be attached to the temporary abutment 710 as described herein and used directly as temporary prostheses without further modification or attachment of additional components. In each of these alternatives, the temporary abutment 10 is still useful for scanning. The information markers 764 can be placed on a lateral side of the abutment cap 780 such that they are not visible (e.g., lingual side). Again, the information markers 764 can be provided in a binary arrangement to provide information regarding the cap 780, the abutment 710, and/or implant.

Referring to FIGS. 7A-7E, various views of components of an alternative prosthesis assembly 800 and the dental implant 120 are shown. As shown in FIG. 7A, the prosthesis assembly 800 includes a temporary abutment 810, a temporary abutment cap 880, a screw 870, and a temporary prosthesis 890, each of which is similar to, or the same as, corresponding components of the previously described prosthesis assemblies of FIG. 6. In FIGS. 7A-7E, each of the components and features is identified by a 800-series reference numeral, and those 800-series reference numerals correspond to like features of the various components and features of the previously described prosthesis assemblies in FIGS. 6A-6E. For example, reference numeral 834 is used to describe the non-rotational structure 834 (FIG. 12B), which is the same as, or similar to, the non-rotational structure 734. Additionally, reference numerals 820, 830, 850, 855, 860, 881, and 888 are used in the figures to illustrate features that are the same as, or similar to, previously described features with reference numbers 720, 730, 750, 755, 760, 781, and 788, respectively.

Referring to FIG. 7B, the temporary abutment 810 generally includes all of the same features as the temporary abutments of the previous embodiments except the temporary abutment 810 lacks the continuous retention groove 732 (FIG. 6B) of the temporary abutment 710 such that the temporary abutment 810 does not couple with the temporary abutment cap 880 (FIG. 7C) in a snap-fit type engagement. Rather, the temporary abutment cap 880 (FIG. 12C) is held in a non-rotational fashion onto the temporary abutment 810 (FIG. 12B) via the screw 870, which is best shown in FIG. 12E. Accordingly, the temporary abutment cap 880 lacks the one or more projections 786 (FIG. 6C) of the temporary abutment cap 780 such that the temporary abutment cap 880 (FIG. 7C) does not couple with the temporary abutment 810 in a snap-fit type engagement.

Additionally, the temporary abutment cap 880 includes an aperture 883 that provides a path for the screw 870 to mate with the implant 120 through the internal bore 840 of the temporary abutment 810, thereby securing the temporary abutment cap 880 and the temporary abutment 810 onto the implant 120 in a non-rotational fashion, as best shown in FIG. 7E. The screw 870 (FIG. 7A) has a different head as compared to the screw 770. The head of the screw 870 includes a groove for mating with an O-ring 873 (FIG. 7E) that aids in sealing the internal bore 840 (FIG. 7B) of the temporary abutment 810. It should be noted that the embodiment of FIGS. 1-5 contemplates an arrangement like FIG. 7 wherein the screw 26 is exposed at the upper surface of healing cap 24 and axially holds both the healing cap 24 and the base 22 on the dental implant 120.

Referring to FIG. 7E, a cross-sectional assembled view of the prosthesis assembly 800 and the dental implant 120 are shown for illustrating how the various components of the prosthesis assembly 800 are assembled and attached to the dental implant 120. The dental implant 120 is installed in a patient's jawbone (not shown) and then the temporary abutment 810 is non-rotationally attached to the implant 120 via a non-rotational feature 822 (FIG. 7C). The temporary abutment cap 880 is coupled to the temporary abutment 810 in a non-rotational manner such that the non-rotational structure 834 (FIG. 7C) of the temporary abutment 810 engages a non-rotational structure 884 (FIG. 7D) of the temporary abutment cap 880. The screw 870 is inserted through the aperture 883 of the temporary abutment cap 880 and the internal bore 840 of the temporary abutment 810 and is threadingly coupled to the implant 120.

Optionally, a temporary prosthesis 890 is coupled to the temporary abutment cap 880. In such an alternative implementation, the information marker locations 862 and/or the information markers 864 can also mate with correspondingly shaped internal surfaces (not shown) of the temporary prosthesis 890 to provide for anti-rotation between the temporary abutment cap 880 and the temporary prosthesis 890. In the case that the temporary prosthesis 890 is not coupled to the temporary abutment cap 880, the temporary abutment cap 880 itself can have an anatomically shaped tooth structure and act as a temporary prosthesis. In that case, the gingiva engages the temporary abutment cap 880 and the temporary abutment 810 to define an emergence profile, such that the combination of these components acts as a healing abutment (as noted above) in addition to serving other functions.

The various methods of creating the permanent patient-specific abutment from the systems of FIGS. 6-7 can be found in U.S. Publication No. 2012/0295223.

While the illustrated embodiments have been primarily described with reference to the development of a patient-specific abutment for a single tooth application, it should be understood that the present invention is also useful in multiple-tooth applications, such as bridges and bars for supporting full or partial dentures. In those situations, the patient-specific abutment would not necessarily need a non-rotational feature for engaging the underlying implant(s) because the final prosthesis would also be supported by another structure in the mouth (e.g., one or more additional underlying implants), which would inherently achieve a non-rotational aspect to the design. In any event, using a scanning process to obtain the necessary information about the emergence profile shape of the gingiva and the dimensional and/or positional information for the implant(s) (via information markers in the temporary prosthetic assembly) can lead to the development of an aesthetically pleasing multiple-tooth system.

While the present invention has been described with reference to one or more particular embodiments, those skilled in the art will recognize that many changes may be made thereto without departing from the scope of the present invention. Each of these embodiments and obvious variations thereof is contemplated as falling within the scope of the present invention, which is set forth in the claims that follow.

## Claims

1. A healing abutment kit (100) for use with a dental implant (120) having a threaded bore, comprising:
a base (22, 122) including a lower region and an upper region, the lower region including an anti-rotational feature (25) capable of non-rotationally mating with one of the dental implants (120), the upper region including a first anti-rotational structure (25) and a first axial-retention structure (28), the base (22) having a through-bore extending through the lower and upper region;
a plurality of polymeric healing abutment caps (24a, 24b, 24c, 24d, 124a, 124b, 124c, 124d), each of the plurality of polymeric healing abutment caps having a second anti-rotational structure (31) being configured to mate with the first anti-rotational structure (25) of the base, each of the plurality of polymeric healing abutment caps having a second axial-retention structure (29) for mating with the first axial-retention structure (28) of the base (22), each of the polymeric healing abutment caps having different geometric dimensions, each of the polymeric abutment caps having an upper surface that includes a unique code (32, 34, 41, 42, 43, 44) that indicates (i) the geometric dimensions of the polymeric healing abutment cap (24a, 24b, 24c, 24d, 124a, 124b, 124c, 124d), wherein the geometric dimensions of the polymeric healing abutment cap include the width (D1, D2) of the polymeric healing abutment cap and the height (H1, H2) of the polymeric healing abutment cap;
and (ii) information concerning the dental implant (120) intended to underlie polymeric healing abutment cap in use;
a dental implant (120);
and
a screw (126) for extending through the through-bore of the base (22) and engagable with the threaded bore of the dental implant (120), the screw (126) capable of holding the base (22) on the dental implant (120).

2. The healing abutment kit (100) of claim 1, wherein the base (22) comprises a flange (27), the first anti-rotational structure (31) and the first axial retention structure (28) being located above the flange (27).

3. The healing abutment kit (100) of claim 1, wherein the information concerning the dental implant (122) intended to underlie the polymeric healing abutment cap in use is the location of a table of the implant.

4. The healing abutment kit (100) of claim 1, wherein the information concerning the dental implant (122) intended to underlie the polymeric healing abutment cap in use is the orientation of an implant anti-rotational feature (12) that mates with the anti-rotational feature (25) of the base (22).

5. The healing abutment kit (100) of claim 1, wherein one of the polymeric abutment caps (24a, 24b, 24c, 24d, 124a, 124b, 124c, 124d) having desired geometric dimensions for the patient's conditions is configured to be selected to be mated with the base (22) after the base is attached to the dental implant.

6. The healing abutment kit (100) of claim 1, wherein the upper surface of the selected polymeric abutment cap includes discrete information marker locations and at least one information marker (41-44, 32, 34) located in one of the discrete information marker locations, the at least information marker providing the unique code.

7. The healing abutment kit of claim 6, wherein the at least one information marker (32, 34, 41-44) and the information marker locations set forth a binary coded marking system.

## Patentansprüche

1. Gingivaformerset (100) zur Verwendung mit einem Zahnimplantat (120), das eine Gewindebohrung aufweist, umfassend:
eine Basis (22, 122), die einen unteren Bereich und einen oberen Bereich beinhaltet, wobei der untere Bereich ein Drehsicherungselement (25) beinhaltet, das in der Lage ist, nicht drehbar mit einem der Zahnimplantate (120) ineinanderzugreifen, wobei der obere Bereich eine erste Drehsicherungsstruktur (25) und eine erste Axialhaltestruktur (28) beinhaltet, wobei die Basis (22) eine Durchgangsbohrung aufweist, die sich durch den unteren und den oberen Bereich erstreckt;
eine Vielzahl von polymeren Gingivaformerkappen (24a, 24b, 24c, 24d, 124a, 124b, 124c, 124d), wobei jede aus der Vielzahl von polymeren Gingivaformerkappen eine zweite Drehsicherungsstruktur (31) aufweist, die konfiguriert ist, um mit der ersten Drehsicherungsstruktur (25) der Basis ineinanderzugreifen, wobei jede aus der Vielzahl von polymeren Gingivaformerkappen eine zweite Axialhaltestruktur (29) zum Ineinandergreifen mit der ersten Axialhaltestruktur (28) der Basis (22) aufweist, wobei jede der polymeren Gingivaformerkappen unterschiedliche geometrische Abmessungen aufweist, wobei jede der polymeren Gingivaformerkappen eine obere Fläche aufweist, die einen eindeutigen Code (32, 34, 41, 42, 43, 44) beinhaltet, der (i) die geometrischen Abmessungen der polymeren Gingivaformerkappe (24a, 24b, 24c, 24d, 124a, 124b, 124c, 124d) angibt, wobei die geometrischen Abmessungen der polymeren Gingivaformerkappe die Weite (D1, D2) der polymeren Gingivaformerkappe und die Höhe (H1, H2) der polymeren Gingivaformerkappe beinhalten;
und (ii) Informationen bezüglich des Zahnimplantats (120) angeben, das vorgesehen ist, um bei Benutzung unter der polymeren Gingivaformerkappe zu liegen;
ein Zahnimplantat (120);
und eine Schraube (126) zum Erstrecken durch die Durchgangsbohrung der Basis (22) und Ineingriffbringen mit der Gewindebohrung des Zahnimplantats (120), wobei die Schraube (126) in der Lage ist, die Basis (22) auf dem Zahnimplantat (120) zu halten.

2. Gingivaformerset (100) nach Anspruch 1, wobei die Basis (22) einen Flansch (27) umfasst, wobei die erste Drehsicherungsstruktur (31) und die erste Axialhaltestruktur (28) über dem Flansch (27) angeordnet sind.

3. Gingivaformerset (100) nach Anspruch 1, wobei die Informationen bezüglich des Zahnimplantats (122), das vorgesehen ist, um bei Benutzung unter der polymeren Gingivaformerkappe zu liegen, die Position eines Plateaus des Implantats ist.

4. Gingivaformerset (100) nach Anspruch 1, wobei die Informationen bezüglich des Zahnimplantats (122), das vorgesehen ist, um bei Benutzung unter der polymeren Gingivaformerkappe zu liegen, die Orientierung eines Implantatdrehsicherungselements (12), das mit dem Drehsicherungselement (25) der Basis (22) ineinandergreift, ist.

5. Gingivaformerset (100) nach Anspruch 1, wobei eine der polymeren Gingivaformerkappen (24a, 24b, 24c, 24d, 124a, 124b, 124c, 124d), die die gewünschten geometrischen Abmessungen für die Bedingungen des Patienten aufweist, konfiguriert ist, um ausgewählt zu werden, um mit der Basis (22) ineinanderzugreifen, nachdem die Basis an dem Zahnimplantat befestigt ist.

6. Gingivaformerset (100) nach Anspruch 1, wobei die obere Fläche der ausgewählten polymeren Gingivaformerkappe einzelne Informationsmarkerpositionen und mindestens einen Informationsmarker (41-44, 32, 34), der in einer der einzelnen Informationsmarkerpositionen angeordnet ist, beinhaltet, wobei der mindestens eine Informationsmarker den eindeutigen Code bereitstellt.

7. Gingivaformerset nach Anspruch 6, wobei der mindestens eine Informationsmarker (32, 34, 41-44) und die Informationsmarkerpositionen ein binär codiertes Markierungssystem darlegen.

## Revendications

1. Kit pilier de cicatrisation (100) pour utilisation avec un implant dentaire (120) comportant un trou fileté, comprenant :
une base (22, 122) possédant une région inférieure et une région supérieure, la région inférieure comportant un élément anti-rotation (25) pouvant s'apparier de manière non rotative à l'un des implants dentaires (120), la région supérieure comportant une première structure anti-rotation (25) et une première structure de rétention axiale (28), la base (22) comportant un trou traversant s'étendant à travers les régions inférieure et supérieure ;
une pluralité de coiffes de pilier de cicatrisation polymères (24a, 24b, 24c, 24d, 124a, 124b, 124c, 124d), chacune de la pluralité de coiffes de pilier de cicatrisation polymères comportant une seconde structure anti-rotation (31) configurée pour s'apparier à la première structure anti-rotation (25) de la base, chacune de la pluralité de coiffes de pilier de cicatrisation polymères comportant une seconde structure de rétention axiale (29) pour s'apparier à la première structure de rétention axiale (28) de la base (22), chacune des coiffes de pilier de cicatrisation polymères présentant des dimensions géométriques différentes, chacune des coiffes de pilier de cicatrisation polymères présentant une surface supérieure qui comprend un code unique (32, 34, 41, 42, 43, 44) qui indique (i) les dimensions géométriques de la coiffe de pilier de cicatrisation polymère (24a, 24b, 24c, 24d, 124a, 124b, 124c, 124d), lesdites dimensions géométriques de la coiffe de pilier de cicatrisation polymère comprenant la largeur (D1, D2) de la coiffe de pilier de cicatrisation polymère et la hauteur (H1, H2) de la coiffe de pilier de cicatrisation polymère ; et (ii) des informations concernant l'implant dentaire (120) destinées à reposer sous une coiffe de pilier de cicatrisation polymère lors de l'utilisation ;
un implant dentaire (120) ;
et
une vis (126) pour s'étendre à travers le trou traversant de la base (22) et s'engager dans le trou fileté de l'implant dentaire (120), la vis (126) pouvant retenir la base (22) sur l'implant dentaire (120).

2. Kit pilier de cicatrisation (100) selon la revendication 1, ladite base (22) comprenant une collerette (27), la première structure anti-rotation (31) et la première structure de rétention axiale (28) située au-dessus de la collerette (27).

3. Kit pilier de cicatrisation (100) selon la revendication 1, lesdites informations concernant l'implant dentaire (122) destinées à reposer sous la coiffe de pilier de cicatrisation polymère lors de l'utilisation étant l'emplacement d'une table de l'implant.

4. Kit pilier de cicatrisation (100) selon la revendication 1, lesdites informations concernant l'implant dentaire (122) destinées à reposer sous la coiffe de pilier de cicatrisation polymère lors de l'utilisation étant l'orientation d'un élément anti-rotation d'implant (12) qui s'apparie à l'élément anti-rotation (25) de la base (22).

5. Kit pilier de cicatrisation (100) selon la revendication 1, l'une des coiffes de pilier polymères (24a, 24b, 24c, 24d, 124a, 124b, 124c, 124d) qui présente les dimensions géométriques souhaitées pour les états du patient étant conçue pour être sélectionnée pour s'apparier à la base (22) après la fixation de la base à l'implant dentaire.

6. Kit pilier de cicatrisation (100) selon la revendication 1, ladite surface supérieure de la coiffe de pilier polymère comprenant des emplacements de marqueurs d'informations distincts et au moins un marqueur d'informations (41 à 44, 32, 34) situé dans l'un des emplacements de marqueurs d'informations distincts, ledit au moins un marqueur d'informations fournissant l'unique code.

7. Kit pilier de cicatrisation selon la revendication 6, ledit au moins un marqueur d'informations (32, 34, 41 à 44) et lesdits emplacements de marqueurs d'informations présentant un système de marquage codé binaire.
